# EUROPÄISCHE PATENTANMELDUNG

(11) **EP 4 621 679 A1**
(43) Veröffentlichungstag der Anmeldung: **24.09.2025**
(21) Anmeldenummer: 24164587.8
(22) Anmeldetag: 19.03.2024
(51) Int. Cl.: G06Q 10/067, G06Q 50/04

(54) **VERFAHREN UND ANORDNUNG ZUR AUTOMATISIERTEN ERSTELLUNG EINES INDUSTRIELLEN INSTANZ-MODELLS**

(71) Anmelder: Siemens Aktiengesellschaft, 80333 München (DE)
(72) Erfinder: Eckl, Roland, 91301 Forchheim (DE); Haderlein-Høgberg, Veronika, 82041 Oberhaching (DE); Listl, Franz Georg, 93186 Pettendorf (DE)
(74) Vertreter: Siemens Patent Attorneys

(57) **Zusammenfassung**

Zur automatisierten Erstellung eines Instanz-Modells einer industriellen Anlage werden neue Instanzdaten empfangen, welche eine Instanz einer Entität beschreiben und in einer Datenstruktur vorliegen, welche durch ein Domänenmodell vorgegeben wird. Die neuen Instanzdaten werden in einer Graphdatenbank abgespeichert, wobei automatisiert geprüft wird, ob die neuen Instanzdaten eine Suchanfrage nach einem Fremdschlüssel enthalten, woraufhin die Graphdatenbank automatisch nach Instanzdaten durchsucht wird, welche den gesuchten Fremdschlüssel als Primärschlüssel anbieten, oder ob die neuen Instanzdaten ein Angebot eines Primärschlüssels enthalten, woraufhin die Graphdatenbank automatisch nach Instanzdaten durchsucht wird, welche den angebotenen Primärschlüssel als Fremdschlüssel suchen. Für alle derart gefundenen Paare wird eine Kante zwischen den jeweiligen Instanzdaten im Instanz-Modell eingefügt. Diese Operationen des Empfangens und Speicherns werden iterativ wiederholt, bis das Instanz-Modell vollständig erstellt ist.

Bevorzugte Weiterbildungen adressieren das Auflösen der Beziehungen zwischen Objekten auf der Instanz-Ebene mithilfe einer abstrakten Beziehung, die im Domänenmodell hinterlegt ist oder sich daraus ableiten lässt. Zumindest einige Ausführungsformen ermöglichen eine domänengetriebene Verknüpfung von Datenobjekten, die es Domänenexperten ermöglicht, spezifische Datenprodukte zu definieren, kundenspezifische wie allgemeine Identitätsmerkmale zu vergeben und diese ohne tiefe technische Kenntnisse an die entsprechende technische Infrastruktur weiterzugeben.

## Beschreibung

### Technisches Gebiet

Die Erfindung betrifft ein Verfahren und eine Anordnung zur automatisierten Erstellung eines industriellen Instanz-Modells.

### Technischer Hintergrund

Ein Instanz-Modell ist ein Datenmodell, welches Instanzen, also konkrete realisierte Varianten, von Datenobjekten enthält und miteinander verknüpft. Ein industrielles Instanz-Modell beschreibt eine konkrete industrielle Anlage in Teilen oder als Ganzes, beispielsweise die konkreten Eigenschaften von vollautomatisierten Arbeitsstationen einer Fertigungslinie mit den zugehörigen Werkstücken und Prozessschritten, sowie entsprechende Verknüpfungen und Abhängigkeiten zwischen diesen Instanzen.

Der Erarbeitung derartiger Datenmodelle und Datenstrukturen liegen - explizit oder implizit - sogenannte Domänenmodelle zugrunde.

Ein Domänenmodell stellt ein abstraktes "Fachmodell" dar, welches Entitäten ("Dinge"), ihre jeweilige Struktur und Beziehungen zueinander in einem Anwendungsgebiet beschreibt. Diese Domänenmodelle stellen damit ein gemeinsames Verständnis über die Objekte in diesem Anwendungsgebiet dar und bieten ein einheitliches Vokabular und eine einheitliche Datenstruktur, wodurch sie die Kommunikation über einen Fachbereich erleichtern und standardisieren. Sie weisen unter anderem folgende Eigenschaften auf:
a. Domänenmodelle (bzw. funktionale Modelle) sind sehr allgemeingültig, d. h. sie bewegen sich oft auf einem abstrakten Niveau und sind nicht ausreichend konkret für den jeweiligen Anwendungsfall.
b. Zusammenhänge werden oft nur anhand einer abstrakten Beziehung formuliert, etwa *"ein Prozessschritt wird an einer Arbeitsstation ausgeführt".* Es wird beispielsweise nicht deutlich, wie man die jeweilige Arbeitsstation identifizieren kann, wie viele Arbeitsstationen es gibt, etc.
c. Einige funktionale Objekttypen in Domänenmodellen weisen zwar Identifikatoren auf, diese sind jedoch sehr unspezifisch und meist nur anhand ihres Namens überhaupt als solche erkennbar. Darüber hinaus sind i.d.R. nur ausgewählte und besonders wichtige Identifikatoren in diesen Modellen vorhanden. (Beispiel: "OrderId"). D.h. oft fehlt es an einer systematischen Beschreibung aller in der Domäne vorkommenden Identifikatoren und ihrer Strukturen, mit der Konsequenz, dass zur Laufzeit entsprechende Strings nicht als "OrderId" erkennbar sind.
d. Darüber hinaus sind Identifikatoren selten bis nie durch das Domänenmodell beschrieben, sondern - mit viel gravierenderen Auswirkungen - häufig sogar Kunden- oder Kontext-spezifisch. Ein Beispiel: Siemens identifiziert Material durch sogenannte A5E-Nummern, bestellbare Produkte durch eine MLFB, Maschinen-Instanzen in Werken mit FIO-Nummern, usw. Es gibt also abstrakte Identifikatoren ("Materialklassen-Identifikator") und spezifische Identifikatoren ("A5E-Nummer bei Siemens für Material"). Erstere sind oft nicht explizit genug, letztere nicht allgemeingültig genug und oft nicht an den entsprechenden Kontext im Domänenmodell angebunden.

Um einen bestimmten Anwendungsfall, beispielsweise eine Wertstromanalyse, zu implementieren, werden zur Laufzeit Daten generiert und beispielsweise über Daten-Pipelines an ein zentrales Daten-Backend geschickt.

Möchte man nun entsprechende Entitäten aus der Realität (also die konkreten, eine Instanz eines Events, eines Materials oder einer Bestellung abbildenden Datenstrukturen) in Verbindung zum Domänenmodell setzen, ergeben sich allein aus dem Unterschied im Abstraktionsniveau heraus folgende Schwierigkeiten:
i. Die Zuordnung eines konkreten Datums zu seinem Äquivalent im Domänenmodell gestaltet sich schwierig. (Welches Instanz-Objekt entspricht eigentlich welchem Domänen-Objekt?)
ii. Die Beziehungen zwischen den unterschiedlichen Datenobjekten untereinander werden - aus den oben genannten Gründen, insbesondere aufgrund von Punkt d) meist gar nicht direkt aufgelöst, sondern die Datenobjekte führen die Informationen als Text mit. So tragen einige Entitäten beispielsweise Identifikatoren (z.B. ein Feld "Id" an einer Bestellung/Order, quasi ein Primärschlüssel) oder verweisen über Angabe des Identifikators darauf (z.B. ein Feld "OrderId" an einem anderen Objekt, welches sich auf eine bestimmte Order beziehen möchte, quasi ein Fremdschlüssel), ohne dass beispielsweise gesichert ist, dass es diese OrderID überhaupt gibt. Das heißt:
   ∘ Es wird nicht semantisch ausgezeichnet, ob es sich bei einem Identifikator um einen Primär- oder Fremdschlüssel handelt
   ∘ Die Identifikatoren sind einfache Durchlaufnummern, die keine echten Relationen darstellen, weil unklar ist, ob das Ziel der Relation auch so existiert bzw. durch einfaches Pattern Matching auffindbar ist (vgl. etwa die verschiedenen Konventionen für die Darstellung von IRDls in CDD vs. Eclass)

Im Bereich der operativen Technologie (OT) besteht dabei typischerweise die Tendenz, Domänenmodelle als quasi-statische Modelle auszuformen, die auch die Instanzdaten entsprechend starr abbilden. Beispielsweise werden
- die Werte von Eigenschaften von Ressourcen typischerweise als "Last value" oder "timeseries" abgebildet, aus denen nur schwer einzelne Datenpunkte extrahiert werden können,
- Events (Alarme, Zustandsänderungen, Scan-Events) in der Regel immer vom Asset ausgehend oder in einem engen Bezug zu ihm erzeugt, d.h. um ein einzelnes Event oder eine Serie von Events eines bestimmten Typs adressieren zu können, muss man immer den Umweg über das Asset gehen, von dem das Event ausging,
- auf ähnliche Weise typischerweise Sensoren und I/Os auf Werte der Instanzen abgebildet.

Darüber hinaus werden Domänen- und Instanz-Modelle traditionell in starren Structured Tag- oder Asset Modellen verwaltet, die ein individuelles, Anwendungsfall-abhängiges Betrachten einzelner Entitäten stark erschweren.

Im Bereich der Informationstechnologie (IT) fokussiert man traditionell auf funktionale Modelle, bei denen hochdynamisch zahlreiche Instanzen kontinuierlich entstehen.

So erzeugt jedes Event eine neue Instanz, die dann typischerweise in einer immer umfangreicher werdenden Tabelle oder sogar nur einer einfachen Liste persistiert wird, bei der jede Zeile eine Instanz darstellt.

Diese Art der Persistierung von Daten erschwert es sehr, sie in anderen Anwendungsfällen, etwa dem Reasoning in einem Knowledge Graphen, sinnvoll und effektiv bereitzustellen.

Zwischen OT und IT lässt sich auch regelmäßig ein Paradigmen-Bruch in der Erfassung von Daten beobachten, beispielsweise was den Entstehungszeitpunkt von Entitäten anbelangt (in der OT während dem Engineering, in der IT während der Laufzeit), oder auch das grundlegende Darstellungskonzept (Listen vs. Strukturen/Objekte).

Traditionell werden die oben beschriebenen Probleme der Verknüpfung und Zuordnung von Datenobjekten im Nachgang - auf der Seite der Datenkonsumption - behoben, typischerweise also beispielsweise im Zuge einer Abfrage durch die Angabe von Verweisen und Bedingungen (z.B. bei SQL innerhalb einer WHERE-Klausel). Diese Herangehensweise hat folgende Nachteile:
a. Die Daten müssen guter Qualität sein, damit man möglichst wenige Abweichungen (etwa in der Formatierung von Identifier-Werten) hantieren muss
b. Die Anwendung muss die Beziehungen zwischen den Datenobjekten (er)kennen, bzw. sie müssen der Fachperson, die beispielsweise die SQL-Abfragen baut, bekannt sein (d.h. sie braucht Domänenwissen)
c. Die Anwendung muss die kundenspezifischen Variationen in der Applikation unterschiedlicher Identifikationsschemata (z.B. die unterschiedlichen Möglichkeiten, eine IRDI zu strukturieren) kennen
d. Solcher Art entstandenen Abfragen, und das Wissen, das in ihnen hinterlegt ist, lassen sich nicht ohne weiteres auf neue oder veränderte Datenquellen übertragen (geringer Grad der Nachnutzung)

Eine weitere bekannte Möglichkeit liegt im Zuge des Aufbaus einer Data Ingestion, bei der man durch die Reihenfolge, in der die Daten abgeholt werden, Daten verknüpfen kann. Auch hier muss Wissen über die Abhängigkeit der Daten und kundenspezifische Lösungen vorhanden sein. Erschwerend kommt hinzu, dass die Daten meist tabellenbasiert abgelegt sind, so dass die zu erzeugenden Beziehungen notwendigerweise bei der Abfrage durch komplizierte JOINs hergestellt werden müssen.

### Zusammenfassung der Erfindung

Die Aufgabe der Erfindung besteht darin, eine Alternative zum Stand der Technik bereitzustellen.

Die Aufgabe der Erfindung wird durch die unabhängigen Patentansprüche gelöst.

Bei dem Verfahren zur automatisierten Erstellung eines industriellen Instanz-Modells werden die folgenden Operationen von Komponenten ausgeführt, wobei die Komponenten Hardware-Komponenten und/oder Software-Komponenten sind, und wobei die Software-Komponenten von einem oder mehreren Prozessoren ausgeführt werden:
- Empfangen, durch eine Netzwerkschnittstelle, von neuen Instanzdaten, welche eine Instanz einer Entität beschreiben und in einer Datenstruktur vorliegen, welche durch ein Domänenmodell vorgegeben wird, das Entitäten und Beziehungen zwischen diesen beschreibt, und wobei das Domänenmodell für jede Entität eine Datenstruktur für zu der Entität gehörige Instanzdaten vorgibt,
- Speichern, durch eine Graphdatenbank, der neuen Instanzdaten in einem Instanz-Modell, welches eine konkrete industrielle Anlage zumindest teilweise beschreibt, wobei das Instanz-Modell in der Graphdatenbank als Knoten vorhandene Instanzdaten und als Kanten Beziehungen zwischen den vorhandenen Instanzdaten enthält, und wobei automatisiert geprüft wird,
   - ob die neuen Instanzdaten eine Suchanfrage nach einem Fremdschlüssel enthalten, woraufhin die Graphdatenbank automatisch nach Instanzdaten durchsucht wird, welche den gesuchten Fremdschlüssel als Primärschlüssel anbieten, oder
   - ob die neuen Instanzdaten ein Angebot eines Primärschlüssels enthalten, woraufhin die Graphdatenbank automatisch nach Instanzdaten durchsucht wird, welche den angebotenen Primärschlüssel als Fremdschlüssel suchen, und wobei für alle derart gefundenen Paare eine Kante zwischen den jeweiligen Instanzdaten im Instanz-Modell eingefügt wird, und
- iteratives Wiederholen der Operationen des Empfangens und Speicherns, bis das Instanz-Modell vollständig erstellt ist.

Die Anordnung zur automatisierten Erstellung eines industriellen Instanz-Modells weist die folgenden Komponenten auf, wobei die Komponenten Hardware-Komponenten und/oder Software-Komponenten sind, und wobei die Software-Komponenten von einem oder mehreren Prozessoren ausführbar sind:
- eine Netzwerkschnittstelle, eingerichtet zum Empfangen von neuen Instanzdaten, welche eine Instanz einer Entität beschreiben und in einer Datenstruktur vorliegen, welche durch ein Domänenmodell vorgegeben wird, das Entitäten und Beziehungen zwischen diesen beschreibt, und wobei das Domänenmodell für jede Entität eine Datenstruktur für zu der Entität gehörige Instanzdaten vorgibt, und
- eine Graphdatenbank, eingerichtet zum Speichern der neuen Instanzdaten in einem Instanz-Modell, welches eine konkrete industrielle Anlage zumindest teilweise beschreibt, wobei das Instanz-Modell in der Graphdatenbank als Knoten vorhandene Instanzdaten und als Kanten Beziehungen zwischen den vorhandenen Instanzdaten enthält, und wobei automatisiert geprüft wird,
   - ob die neuen Instanzdaten eine Suchanfrage nach einem Fremdschlüssel enthalten, woraufhin die Graphdatenbank automatisch nach Instanzdaten durchsucht wird, welche den gesuchten Fremdschlüssel als Primärschlüssel anbieten, oder
   - ob die neuen Instanzdaten ein Angebot eines Primärschlüssels enthalten, woraufhin die Graphdatenbank automatisch nach Instanzdaten durchsucht wird, welche den angebotenen Primärschlüssel als Fremdschlüssel suchen, und wobei für alle derart gefundenen Paare eine Kante zwischen den jeweiligen Instanzdaten im Instanz-Modell eingefügt wird.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden. Gleiches gilt für die nachfolgenden Erläuterungen.

Der Begriff "Computer" sollte möglichst weit interpretiert werden, insbesondere um alle elektronischen Geräte mit Datenverarbeitungseigenschaften abzudecken. Computer können daher beispielsweise Personal Computer, Server, Clients, speicherprogrammierbare Steuerungen (PLCs), Handheld-Computersysteme, Mobilfunkgeräte, Tablets, Smartphones oder beliebige andere Geräte sein, die Daten computergestützt verarbeiten können, z.B. Prozessoren oder andere elektronische Geräte zur Datenverarbeitung. Computer können insbesondere einen oder mehrere Prozessoren und Speichereinheiten umfassen.

Im Zusammenhang mit der Erfindung kann es sich bei "Speicher", "Speichereinheit" oder "Speichermodul" und dergleichen beispielsweise um einen flüchtigen Speicher in Form von Random-Access Memory (RAM) oder um einen permanenten Speicher wie eine Festplatte, ein Solid State Drive oder eine Diskette handeln.

Das Verfahren und die Anordnung, oder zumindest eine ihrer Ausführungsformen, adressieren insbesondere den zweiten eingangs genannten Aspekt (Punkt ii), d.h. das Auflösen der Beziehungen zwischen Objekten auf der Instanz-Ebene mithilfe einer abstrakten Beziehung, die im Domänenmodell hinterlegt ist oder sich daraus ableiten lässt.

Das Verfahren und die Anordnung, oder zumindest eine ihrer Ausführungsformen, adressieren die Schwierigkeiten bei der Kombination von Daten aus dem OT- und IT-Bereich, sowie die nachteiligen Eigenschaften heutiger Ansätze, wenn es darum geht zwischen Entitäten Relationen herzustellen. Bisherige Lösungsansätze erfordern einen nachgelagerten manuellen Aufwand oder sind nicht flexibel genug, um den Anforderungen gerecht zu werden. Das Verfahren und die Anordnung, oder zumindest eine ihrer Ausführungsformen, ermöglichen hingegen eine domänengetriebene Verknüpfung von Datenobjekten, die es Domänenexperten ermöglicht, spezifische Datenprodukte zu definieren, kundenspezifische wie allgemeine Identitätsmerkmale zu vergeben und diese ohne tiefe technische Kenntnisse an die entsprechende technische Infrastruktur weiterzugeben.

Wesentliche Unterschiede und Vorteile des Verfahrens und der Anordnung, oder zumindest einer ihrer Ausführungsformen, liegen somit in der automatischen Erstellung von Verknüpfungen zwischen Entitäten auf Instanz-Ebene, wobei die Beziehungen durch den Experten in einem funktionalen Domänenmodell definiert werden. Dies ermöglicht eine effizientere und qualitativ hochwertigere Bereitstellung von Datenprodukten sowie ein effektives Reasoning über Instanz-Daten, ohne die Beziehungen durch Text-Matching bei jeder Abfrage manuell berücksichtigen zu müssen.

Das Verfahren und die Anordnung, oder zumindest eine ihrer Ausführungsformen, zielen darauf ab, sowohl Daten aus dem OT-Bereich als auch Daten aus dem IT-Bereich objektorientiert darzustellen und zu verwalten, wobei die tatsächliche (physische) Persistenz ein Implementierungs-Detail ist, welches je nach Deployment sogar unterschiedlich ausfallen kann. Bei dem Verfahren und der Anordnung, oder zumindest einer ihrer Ausführungsformen, geht es auch darum, die Beziehungen aus dem funktionalen Modell auf IT-Ebene (wo die Entitäten ja zur Laufzeit entstehen), auf die Instanzen zu übertragen und per Entity Resolution nachzuziehen.

Das Verfahren und die Anordnung, oder zumindest eine ihrer Ausführungsformen, verknüpfen die verschiedenen Paradigmen von IT- und OT-Welt durch eine objektorientierte Sicht miteinander, wodurch ein direkter Bezug zum funktionalen Domänenmodell entsteht. Die Verknüpfungen zwischen den konkreten Instanzen werden vollautomatisch einmal instanziiert und liegen dann zur Nachnutzung vor. Das bedeutet, dass sie nicht bei jeder Abfrage neu gematcht und generiert werden müssen. Die Verknüpfungen werden "first dass citizens", die auch in anderen, nicht SQL-basierten Systemen genutzt und beispielsweise für das Reasoning über Daten effektiv eingesetzt werden können.

Das Verfahren und die Anordnung, oder zumindest eine ihrer Ausführungsformen, erlauben es einer Domänenexpertin, die Verknüpfung von Entitäten auf Domänenniveau (d.h. unabhängig von den darunter liegenden konkreten Implementierungen) vorzunehmen. Die Domänenexpertin bringt das nötige Wissen zu ihrer Domäne generell und zu dem jeweiligen Use Case bereits mit und ist damit näher am konkreten Informationsbedarf als beispielsweise ein Datenbankentwickler.

Das Verfahren und die Anordnung, oder zumindest eine ihrer Ausführungsformen, ermöglichen eine Art "Low Code-Verknüpfung" von Datentöpfen, die die Domänenexpertin ermächtigt, ihre Datenanforderungen bereits so zu formulieren, dass sie effizient in den nötigen Code zur Zusammenstellung dieser Datenprodukte umgesetzt werden können. Damit wird der Prozess der Bereitstellung und Verknüpfung von Daten aus unterschiedlichen Datentöpfen verkürzt, effizienter gestaltet und ist - aufgrund der Domänenkenntnis dessen, der diese Verknüpfungen vornimmt - präsumtiv von besserer Qualität.

### Ausgestaltungen der Erfindung

Gemäß einer Ausführungsform werden die neuen Instanzdaten iterativ von unterschiedlichen Quellsystemen empfangen.

In einer Weiterbildung wird das Domänenmodell, welches für jede Entität in den unterschiedlichen Quellsystemen eine Datenstruktur für zu der Entität gehörige Instanzdaten vorgibt, vorab durch folgende Operationen angepasst:
- in einem ersten Schritt Empfangen, durch eine Benutzerschnittstelle, von Benutzereingaben, anhand derer eine Auswahl von für einen Anwendungsfall relevanten Entitäten in dem Domänenmodell automatisch festgelegt wird,
- in einem zweiten Schritt Ausgeben, durch die Benutzerschnittstelle, von in dem Domänenmodell vorhandenen Beziehungen zwischen den ausgewählten Entitäten und Empfangen, durch die Benutzerschnittstelle, von Benutzereingaben, anhand derer weitere Beziehungen zwischen den ausgewählten Entitäten in dem Domänenmodell automatisiert festgelegt werden.

Gemäß einer Ausführungsform wird das Domänenmodell weiterhin vorab durch folgende Operation angepasst:
- in einem dritten Schritt Empfangen, durch die Benutzerschnittstelle, von Benutzereingaben, anhand derer jeder ausgewählten Entität mindestens ein Identifikationsmerkmal als Primärschlüssel automatisiert zugeordnet wird.

In einer Weiterbildung wird das Domänenmodell weiterhin vorab durch folgende Operation angepasst:
- in einem vierten Schritt Empfangen, durch die Benutzerschnittstelle, von Benutzereingaben, anhand derer mindestens einer ausgewählten Entität eine Suchanfrage nach einem Identifikationsziel, insbesondere einem einzelnen Identifikationsmerkmal, einer Kombination von Identifikationsmerkmalen oder einem regelbasierten Identifikationsziel, automatisiert zugeordnet wird.

Gemäß einer Ausführungsform enthält das Domänenmodell mindestens eine Ontologie, mindestens ein UML-Modell, und/oder mindestens ein Anchor Advanced Domain Model.

Das Computerprogramm umfasst Befehle, die bei der Ausführung des Programms durch einen Computer diesen veranlassen, das Verfahren auszuführen.

Die Vorrichtung zur Bereitstellung des Computerprogramms ist ein computerlesbares Speichermedium, auf dem das Computerprogramm gespeichert ist, oder ein Server, welcher zur Bereitstellung des Computerprogramms in einem Netzwerk eingerichtet ist.

### Exemplarische Ausführungsbeispiele der Zeichnung

Die obigen und andere Aspekte der vorliegenden Erfindung lassen sich am besten anhand der nachfolgenden ausführlichen Beschreibung in Verbindung mit den beiliegenden Figuren nachvollziehen. In den Figuren sind zum Zwecke der Veranschaulichung der Erfindung derzeit bevorzugte Ausführungsformen gezeigt, wobei jedoch davon ausgegangen wird, dass die Erfindung nicht auf die speziellen offenbarten Mittel beschränkt ist. In den Figuren sind gleiche oder funktionsgleiche Elemente mit denselben Bezugszeichen versehen, sofern nichts anderes angegeben ist. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen:
- Fig. 1: eine erste Ausführungsform,
- Fig. 2: eine weitere Ausführungsform,
- Fig. 3: ein Flussdiagramm einer möglichen beispielhaften Ausführungsform.

In der folgenden Beschreibung werden verschiedene Aspekte der vorliegenden Erfindung und deren Ausführungsformen beschrieben. Für die Fachperson ist klar, dass die jeweiligen Ausführungsformen entweder nur mit einigen oder mit allen beschriebenen Aspekten implementiert werden können. Zu Erklärungszwecken werden beispielsweise spezifische Zahlen und/oder Konfigurationen angegeben, um ein gründliches Verständnis zu ermöglichen. Die Fachperson ist jedoch auch in der Lage, die jeweiligen Ausführungsformen ohne diese spezifischen Details zu implementieren.

Die beschriebenen Komponenten können Hardware-Komponenten oder Software-Komponenten sein. Eine Software-Komponente kann beispielsweise ein Software-Modul wie eine Software-Bibliothek sein; eine einzelne Prozedur, eine Subroutine oder eine Funktion; oder je nach Programmierparadigma ein beliebiger Abschnitt von Programmcode, welcher die Funktion der Software-Komponente implementiert. Eine Kombination aus Hardware-Komponenten und Software-Komponenten ist ebenso möglich, beispielsweise wenn einige Operationen vorzugsweise ausschließlich durch spezielle Hardware (z.B. ein Prozessor in Form eines ASIC oder FPGA) und andere Operationen durch Software implementiert werden. Weiterhin ist auch möglich, dass ein- und dieselbe Operation durch Zusammenwirken einer Hardware-Komponente mit einer Software-Komponente ausgeführt wird.

### Detaillierte Beschreibung der Ausführungsbeispiele

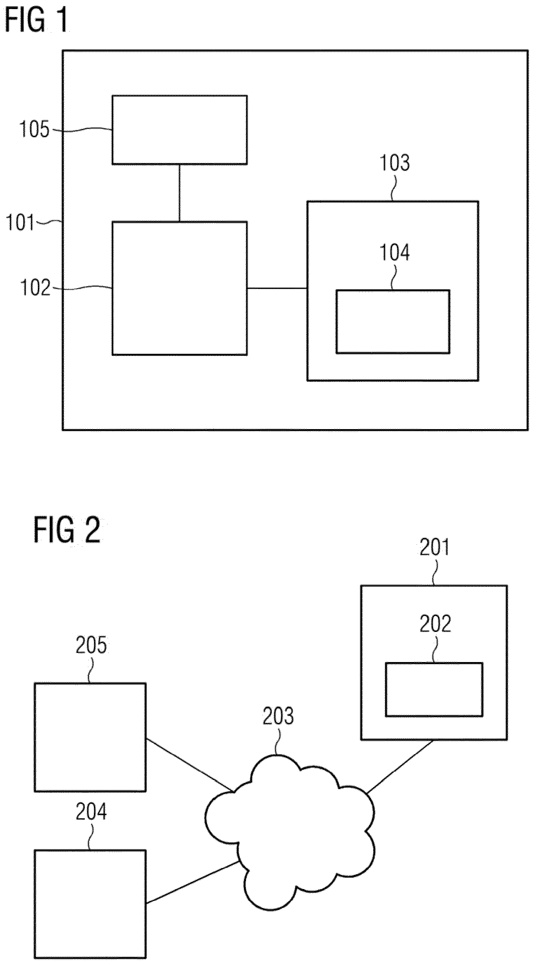

Fig. 1 zeigt eine beispielhafte Anordnung für die computerbasierte Implementierung der Erfindung, die Folgendes umfasst:
- (101): Computersystem
- (102): Prozessor
- (103): Speicher
- (104): Computerprogramm
- (105): Benutzerschnittstelle

In dieser Ausführungsform der Erfindung enthält das Computerprogramm 104 Programmbefehle zur Durchführung der Erfindung. Das Computerprogramm 104 ist im Speicher 103 gespeichert, wodurch der Speicher 103 und/oder das zugehörige Computersystem 101 zu einer Bereitstellungsvorrichtung für das Computerprogramm 104 wird. Das Computersystem 101 kann die Erfindung ausführen, indem es die Programmbefehle des Computerprogramms 104 durch den Prozessor 102 ausführt. Die Ergebnisse der Erfindung können auf der Benutzerschnittstelle 105 dargestellt werden. Alternativ können sie im Speicher 103 oder auf einem anderen geeigneten Datenspeichermedium gespeichert werden.

Fig. 2 zeigt eine weitere beispielhafte Anordnung für die computerbasierte Implementierung der Erfindung, die Folgendes umfasst:
- (201): Bereitstellungsvorrichtung
- (202): Computerprogramm
- (203): Computernetzwerk/Internet
- (204): Computersystem
- (205): Mobilgerät/Smartphone
In dieser Ausführungsform speichert die Bereitstellungsvorrichtung 201 ein Computerprogramm 202, das Programmbefehle zur Durchführung der Erfindung enthält. Die Bereitstellungsvorrichtung 201 stellt das Computerprogramm 202 über ein Computernetzwerk/Internet 203 zur Verfügung. Beispielsweise kann ein Computersystem 204 oder ein Mobilgerät/Smartphone 205 das Computerprogramm 202 laden und die Erfindung durch Abarbeitung der Programmbefehle des Computerprogramms 202 ausführen.

In einer Variante dieser Ausführungsform ist die Bereitstellungsvorrichtung 201 ein computerlesbares Speichermedium, wie beispielsweise eine SD-Karte, das das Computerprogramm 202 speichert und direkt mit dem Computersystem 204 oder dem Mobilgerät/Smartphone 205 verbunden ist, um das Computerprogramm 202 zu laden und die Erfindung durch Abarbeitung der Programmbefehle des Computerprogramms 202 auszuführen.

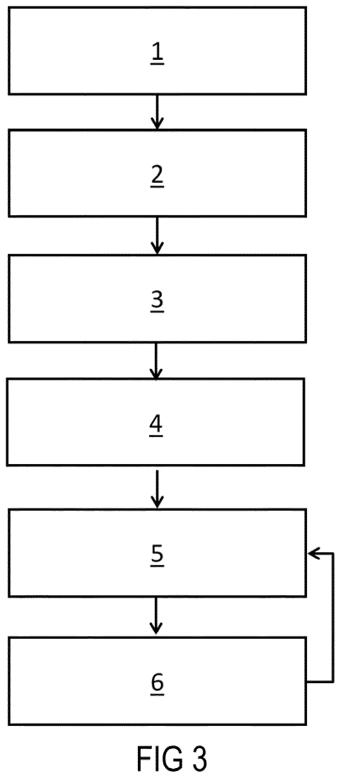

Vorzugsweise kann die in Abbildung 3 gezeigte Ausführungsform mit einer Anordnung gemäß Fig. 1 oder Fig. 2 implementiert werden.

Die folgenden Ausführungsbeispiele beschreiben einen domänen-getriebenen, anwendungs- und persistenz-unabhängigen Weg zur Verknüpfung von Datenobjekten, der es einer Domänenexpertin erlaubt, selbst die aus dem jeweiligen Anwendungsfall heraus nötigen Verknüpfungen zwischen Entitäten vorzunehmen und dann "per Knopfdruck" an entsprechende technische Infrastrukturen (Pipelines, Mapping-Services etc.) weiterzugeben und umsetzen zu lassen.

Damit wird es der Domänenexpertin möglich, ohne auf die Ebene von SQL-Abfragen oder Daten-Pipelines gehen zu müssen, jeweils Anwendungsfall-spezifische Datenprodukte zu definieren und bei der jeweils darunter liegenden Daten-Infrastruktur zu bestellen.

Folgende drei Vorbedingungen müssen erfüllt sein:
Erstens muss ein für den jeweiligen Anwendungsfall formalisiertes Domänenmodell mit zugehörigen Datenstrukturen für die später zur jeweiligen Entität zugehörigen Instanzdaten existieren. D.h. jede Definition einer Entität innerhalb dieses Modells legt auch die Datenstruktur der später zugehörigen Instanzdaten fest. Dieses Domänenmodell kann entweder bereits vorgefertigt vorliegen und allgemein anwendbar sein, oder es erweitert vorgefertigte Domänenmodelle für einen bestimmten Anwendungsfall, oder ist vollständig Anwendungsfall-spezifisch. Die konkreten Darstellungsformalismen für dieses Domänenmodell wählt die Fachperson anhand ihres Fachwissens aus. Denkbar sind etwa folgende Formalismen oder Kombinationen davon: Ontologien (RDF/OWL), UML-Modelle, Anchor Advanced Domain Models.

Zweitens wurden Identifikations-Systeme festgelegt bzgl.
∘ Identifikations-Norm (z.B. "Siemens A5E-Materialnummern", oder"IRDI")
∘ Aufbau, Varianten, normalisiertes Zielformat. Teilweise sind unterschiedliche Schreibweisen erlaubt, bzw. treten einfach verschiedene Varianten auf. Beispiel IRDI:
   ▪ 0173-1#02-AAO677#002 (ECLASS Schreibweise mit Minus, ohne leere Gruppen)
   ▪ 0112/2///61987#ABA300#006 (CDD Schreibweise mit Slash und Trennern auch für leere Gruppen)

Drittens liegt eine Datensenke vor, welche graphen- bzw. objektorientierten Zugriff (mit vollwertigen Referenztypen) erlaubt.

Fig. 3 zeigt ein Flussdiagramm einer möglichen beispielhaften Ausführungsform des Verfahrens zur automatisierten Erstellung eines industriellen Instanz-Modells, welche aus einem Ablauf mit mehreren Schritten besteht.

In einem ersten Schritt (1) empfängt eine Benutzerschnittstelle Benutzereingaben, welche eine Auswahl von für einen Anwendungsfall relevanten Entitäten aus einem Domänenmodell festlegen. Einige der Entitäten in der Auswahl können zuvor von einem Benutzer spezifisch für den Anwendungsfall individuell hinzugefügt worden sein.

In einem zweiten Schritt (2) werden aus dem Domänenmodell Beziehungen der ausgewählten Entitäten untereinander über die Benutzerschnittstelle ausgegeben. Wo keine direkten Beziehungen bestehen, Entitäten nur über viele Zwischen-Identitäten miteinander verbunden sind oder individuelle Entitäten eingefügt wurden, erfasst die Benutzerschnittstelle nun Benutzereingaben, welche Beziehungen zwischen Entitäten festlegen - entweder unmittelbar, d.h. durch existierende Abbildungsregeln oder Mappingtabellen, oder durch das Festlegen eines entsprechenden Pfades. Gegebenenfalls erfasst die Benutzerschnittstelle hierzu auch Benutzereingaben, welche Entitäten dazwischen einfügen, um diese Pfade zu ermöglichen.

In einem dritten Schritt (3) empfängt die Benutzerschnittstelle Benutzereingaben, welche jeder Entität ein oder mehrere Identifikationsmerkmale gemäß der zur Verfügung stehenden Identifikationssysteme zuordnen. Hierzu bietet die Benutzerschnittstelle für jede Identität bestimmte Merkmale an, die dabei helfen, sie zu identifizieren:
∘ Bestehende Eigenschaften aus dem Domänen-Modell können markiert werden. ("Id" vom Typ String wird als "Siemens A5E-Materialnummer" ausgewiesen)
∘ Neue Eigenschaften mit identifizierendem Potential können hinzugefügt werden, wenn vom Domänenmodell her entsprechende Identifikatoren an der Entität nicht vorgesehen sind.

In einem vierten Schritt (4) empfängt die Benutzerschnittstelle für den Fall, dass eine Entität auf eine andere Entität verweist, Benutzereingaben, welche diesem Verweis ein Identifikationsziel zuweisen, so dass die jeweilige Entität basierend auf bestimmten Merkmalen, die ihr zur Verfügung stehen, nach der referenzierten Ziel-Entität suchen kann. Identifikationsziele können hierbei
∘ auf einzelnen Identifikationsmerkmalen beruhen (1:1 Abbildung),
∘ aus Kombinationen von Merkmalen bestehen (etwa "Prozessschritt wird identifiziert durch Arbeitsplatz und Werkstück"), und/oder
∘ aus Regeln bestehen (bezugnehmend auf weitere Eigenschaften der Entität, auch wenn diese kein direktes Identifikationsmerkmal darstellen).

In einem fünften Schritt (5) werden Daten aus verschiedenen Quellsystemen in der durch das Domänenmodell vorgegebenen und damit standardisierten Datenstruktur an ein Zielsystem, also etwa einen Data Store, der als Informationsquelle für ein Dashboard dienen soll und hierfür eine Graphdatenbank vorhält, abgestrahlt. Bei diesem "Inject"-Schritt werden die Identifikatoren vorteilhafterweise direkt auf die normalisierte Darstellung gebracht.

In einem sechsten Schritt (6) werden die Instanzen der Entitäten im Zielsystem gespeichert. Beim Eintreffen einer neuen Instanz im Zielsystem wird geprüft, ob es selbst nach Identifikatoren SUCHT (Fremdschlüssel) oder welche BIETET (Primärschlüssel).
a) Ist die neue Instanz auf der Suche nach der Auflösung eines bestimmten Fremdschlüssel, so wird automatisch geprüft, ob es bereits Instanzen gibt, die diesen als Primärschlüssel bei sich anbieten ("Gibt es denjenigen, den ich suche, schon-Szenario"). Wird kein Ziel gefunden, verbleibt die Referenz unbefriedigt und sie wird beim Eintreffen weiterer Instanzen erneut geprüft.
b) Suchen andere Instanzen also noch nach Zielen für ihre Referenzen, wird nun geprüft wer nach Identifikatoren sucht, die die hinzugekommene zu bieten hat. ("Wer sucht mich, aber hat mich noch nicht gefunden?-Szenario")

Immer wenn ein Biete-Suche-Pärchen gefunden wurde, so wird die Beziehung direkt im Instanz-Modell hergestellt. Anstatt nur die ID des Ziels zur Verfügung zu haben, wird eine direkte Verbindung gezogen. Das heißt zwischen beiden Entitäten wird eine "Kante" eingezogen, die ab dann bereit liegt und genutzt werden kann, ohne dass das "match making" bei jeder neuen Abfrage / Analyse neu gezogen werden muss.

Vorteilhafterweise wird die Original-Information des gesuchten bzw. angebotenen Identifikators im Zielsystem nicht komplett verworfen, sondern steht weiterhin im Sinne einer Referenzinformation / eines Metadatums zusätzlich zur Verfügung.

Das Verfahren kann von einem oder mehreren Prozessoren ausgeführt werden. Beispiele für Prozessoren umfassen einen Mikrocontroller oder einen Mikroprozessor, einen anwendungsspezifischen integrierten Schaltkreis (ASIC - Application Specific Integrated Circuit) oder einen neuromorphen Mikrochip, insbesondere eine neuromorphe Prozessoreinheit. Der Prozessor kann Teil eine Computers beliebiger Art sein, einschließlich mobiler Geräte wie Tablet-Computer, Smartphones oder Laptops, oder Teil eines Servers in einer Betriebszentrale oder einer Cloud.

Das oben beschriebene Verfahren kann durch ein Computerprogramm implementiert werden, dessen von einem oder mehreren Prozessoren eines Computersystems ausführbare Anweisungen auf einem oder mehreren computerlesbaren Speichermedien gespeichert sind. Durch die Ausführung der Anweisungen führt das Computersystem Aktionen aus, die den Operationen des oben beschriebenen Verfahrens entsprechen.

Der Programmcode zur Implementierung der hier beschriebenen Abläufe kann auf einem computerlesbaren Speichermedium oder Datenspeicher wie z.B. einem Cache-Speicher, Pufferspeicher, RAM, FLASH, austauschbaren Medium, einer Festplatte oder einem anderen computerlesbaren Speichermedium bereitgestellt werden. Zu computerlesbaren Speichermedien gehören verschiedene Typen flüchtiger und nichtflüchtiger Speichermedien. Die in den Figuren dargestellten oder hier beschriebenen Funktionen, Vorgänge oder Aufgaben können als Reaktion auf einen oder mehrere Sätze von Programmbefehlen, die auf computerlesbaren Speichermedien gespeichert sind, ausgeführt werden. Die Funktionen, Vorgänge oder Aufgaben können vom verwendeten Befehlssatz und der Art des Speichermediums, des Prozessors oder dessen Abarbeitungsstrategie unabhängig sein und durch Software, Hardware, integrierte Schaltkreise, Firmware, Mikrocode und dergleichen, die allein oder zusammen arbeiten, ausgeführt werden. Ebenso können bei der Abarbeitung des Programmcodes Simultanverarbeitung, Mehrprogrammbetrieb, Parallelverarbeitung und dergleichen zum Einsatz kommen.

Die Erfindung wurde detailliert unter Bezugnahme auf Ausführungsbeispiele beschrieben. Abweichungen und Modifikationen sind möglich, wenn sie dem Wesen der Erfindung entsprechen und in ihren von den Ansprüchen definierten Schutzumfang fallen. Der Ausdruck "A, B und/oder C" als alternative Formulierung kann bedeuten, dass ein, mehrere oder alle Elemente aus A, B und C benutzt werden können.

Unabhängig vom grammatikalischen Geschlecht eines bestimmten Begriffes sind Personen mit männlicher, weiblicher oder anderer Geschlechteridentität mit umfasst.

## Patentansprüche

1. Computerimplementiertes Verfahren zur automatisierten Erstellung eines industriellen Instanz-Modells, bei dem die folgenden Operationen von Komponenten ausgeführt werden, wobei die Komponenten Hardware-Komponenten und/oder Software-Komponenten sind, und wobei die Software-Komponenten von einem oder mehreren Prozessoren ausgeführt werden:
- Empfangen (5), durch eine Netzwerkschnittstelle, von neuen Instanzdaten, welche eine Instanz einer Entität beschreiben und in einer Datenstruktur vorliegen, welche durch ein Domänenmodell vorgegeben wird, das Entitäten und Beziehungen zwischen diesen beschreibt, und wobei das Domänenmodell für jede Entität eine Datenstruktur für zu der Entität gehörige Instanzdaten vorgibt,
- Speichern (6), durch eine Graphdatenbank, der neuen Instanzdaten in einem Instanz-Modell, welches eine konkrete industrielle Anlage zumindest teilweise beschreibt, wobei das Instanz-Modell in der Graphdatenbank als Knoten vorhandene Instanzdaten und als Kanten Beziehungen zwischen den vorhandenen Instanzdaten enthält, und wobei automatisiert geprüft wird,
- ob die neuen Instanzdaten eine Suchanfrage nach einem Fremdschlüssel enthalten, woraufhin die Graphdatenbank automatisch nach Instanzdaten durchsucht wird, welche den gesuchten Fremdschlüssel als Primärschlüssel anbieten, oder
- ob die neuen Instanzdaten ein Angebot eines Primärschlüssels enthalten, woraufhin die Graphdatenbank automatisch nach Instanzdaten durchsucht wird, welche den angebotenen Primärschlüssel als Fremdschlüssel suchen, und wobei für alle derart gefundenen Paare eine Kante zwischen den jeweiligen Instanzdaten im Instanz-Modell eingefügt wird, und
- iteratives Wiederholen der Operationen des Empfangens (5) und Speicherns (6), bis das Instanz-Modell vollständig erstellt ist.

2. Verfahren nach Anspruch 1,
- bei dem die neuen Instanzdaten iterativ von unterschiedlichen Quellsystemen empfangen werden.

3. Verfahren nach einem der vorhergehenden Ansprüche,
- bei dem das Domänenmodell, welches für jede Entität in den unterschiedlichen Quellsystemen eine Datenstruktur für zu der Entität gehörige Instanzdaten vorgibt, vorab durch folgende Operationen angepasst wird:
- in einem ersten Schritt (1) Empfangen, durch eine Benutzerschnittstelle, von Benutzereingaben, anhand derer eine Auswahl von für einen Anwendungsfall relevanten Entitäten in dem Domänenmodell automatisch festgelegt wird,
- in einem zweiten Schritt (2) Ausgeben, durch die Benutzerschnittstelle, von in dem Domänenmodell vorhandenen Beziehungen zwischen den ausgewählten Entitäten und Empfangen, durch die Benutzerschnittstelle, von Benutzereingaben, anhand derer weitere Beziehungen zwischen den ausgewählten Entitäten in dem Domänenmodell automatisiert festgelegt werden.

4. Verfahren nach Anspruch 3, bei dem das Domänenmodell weiterhin vorab durch folgende Operation angepasst wird:
- in einem dritten Schritt (3) Empfangen, durch die Benutzerschnittstelle, von Benutzereingaben, anhand derer jeder ausgewählten Entität mindestens ein Identifikationsmerkmal als Primärschlüssel automatisiert zugeordnet wird.

5. Verfahren nach Anspruch 4, bei dem das Domänenmodell weiterhin vorab durch folgende Operation angepasst wird:
- in einem vierten Schritt (4) Empfangen, durch die Benutzerschnittstelle, von Benutzereingaben, anhand derer mindestens einer ausgewählten Entität eine Suchanfrage nach einem Identifikationsziel, insbesondere einem einzelnen Identifikationsmerkmal, einer Kombination von Identifikationsmerkmalen oder einem regelbasierten Identifikationsziel, automatisiert zugeordnet wird.

6. Verfahren nach einem der vorhergehenden Ansprüche,
- bei dem das Domänenmodell mindestens eine Ontologie, mindestens ein UML-Modell, und/oder mindestens ein Anchor Advanced Domain Model enthält.

7. Anordnung zur automatisierten Erstellung eines industriellen Instanz-Modells, mit den folgenden Komponenten, wobei die Komponenten Hardware-Komponenten und/oder Software-Komponenten sind, und wobei die Software-Komponenten von einem oder mehreren Prozessoren ausführbar sind:
- eine Netzwerkschnittstelle, eingerichtet zum Empfangen (5) von neuen Instanzdaten, welche eine Instanz einer Entität beschreiben und in einer Datenstruktur vorliegen, welche durch ein Domänenmodell vorgegeben wird, das Entitäten und Beziehungen zwischen diesen beschreibt, und wobei das Domänenmodell für jede Entität eine Datenstruktur für zu der Entität gehörige Instanzdaten vorgibt, und
- eine Graphdatenbank, eingerichtet zum Speichern (6) der neuen Instanzdaten in einem Instanz-Modell, welches eine konkrete industrielle Anlage zumindest teilweise beschreibt, wobei das Instanz-Modell in der Graphdatenbank als Knoten vorhandene Instanzdaten und als Kanten Beziehungen zwischen den vorhandenen Instanzdaten enthält, und wobei automatisiert geprüft wird,
- ob die neuen Instanzdaten eine Suchanfrage nach einem Fremdschlüssel enthalten, woraufhin die Graphdatenbank automatisch nach Instanzdaten durchsucht wird, welche den gesuchten Fremdschlüssel als Primärschlüssel anbieten, oder
- ob die neuen Instanzdaten ein Angebot eines Primärschlüssels enthalten, woraufhin die Graphdatenbank automatisch nach Instanzdaten durchsucht wird, welche den angebotenen Primärschlüssel als Fremdschlüssel suchen, und wobei für alle derart gefundenen Paare eine Kante zwischen den jeweiligen Instanzdaten im Instanz-Modell eingefügt wird.

8. Computerprogramm, umfassend Befehle, die bei der Ausführung des Programms durch einen Computer diesen veranlassen, das Verfahren nach Anspruch 1 auszuführen.

9. Vorrichtung zur Bereitstellung eines Computerprogramms, umfassend Befehle, die bei der Ausführung des Programms durch einen Computer diesen veranlassen, das Verfahren nach Anspruch 1 auszuführen, wobei die Vorrichtung
- ein computerlesbares Speichermedium ist, auf dem das Computerprogramm gespeichert ist, oder
- ein Server ist, welcher zur Bereitstellung des Computerprogramms in einem Netzwerk eingerichtet ist.
